# EUROPÄISCHE PATENTSCHRIFT

(11) **EP 3 188 890 B1**
(45) Veröffentlichungstag und Bekanntmachung des Hinweises auf die Patenterteilung: **12.02.2020**
(21) Anmeldenummer: 15757492.2
(22) Anmeldetag: 02.09.2015
(51) Int. Cl.: B29C 48/36, B29C 48/70, B29C 48/10, B29C 48/32, B29C 48/25, B29B 7/80, B29C 45/17

(54) **BLASKOPF ZUM DURCHFÜHREN EINES BLASFOLIENEXTRUSIONSVERFAHRENS UND SPÜLVERFAHREN**
ANNULAR DIE FOR BLOWN FILM EXTRUSION AND METHOD FOR PURGING
TÊTE D'EXTRUSION ANNULAIRE POUR L'EXTRUSION DE FILM SOUFFLÉ ET PROCÉDÉ DE PURGE

(30) Priorität: 03.09.2014 DE 102014112714
(43) Veröffentlichungstag der Anmeldung: 12.07.2017
(73) Patentinhaber: Windmöller & Hölscher KG, 49525 Lengerich (DE)
(72) Erfinder: BACKMANN, Martin, 49525 Lengerich (DE); JÄCKERING, Hermann-Josef, 48488 Emsbüren (DE); BUSSMANN, Markus, 45147 Essen (DE); LIESBROCK, Bernd, 49525 Lengerich (DE); GOLUBSKI, Karsten, 45721 Haltern am See (DE)
(86) Internationale Anmeldenummer: PCT/EP2015/070073
(87) Internationale Veröffentlichungsnummer: WO 2016/034638

(56) Entgegenhaltungen:
- EP-A1- 0 113 041
- EP-A1- 0 887 172
- DE-A1- 2 428 321
- DE-A1- 3 245 084
- JP-A- H1 058 521
- JP-A- S5 542 869
- JP-U- S5 869 415
- US-A- 3 911 073
- US-A1- 2011 001 267

## Beschreibung

Die vorliegende Erfindung betrifft einen Blaskopf mit einer Wendevorrichtung für das Wenden einer Schmelze und ein Verfahren für die Durchführung eines Spülvorgangs in einer Extrusionsvorrichtung.

Es ist bekannt, dass Extrusionsvorrichtungen verwendet werden, um eine Kunststoffschmelze zu erzeugen. Siehe zum Beispiel die Druckschriften JPH1058521 A und DE 24 28 321 A1. Diese Kunststoffschmelze kann in unterschiedlichster Weise weiterverwendet werden. So ist es beispielsweise denkbar, die Schmelze in eine Kavität einer Spritzgussvorrichtung einzubringen, um dort entsprechende Bauteile durch Spritzguss zu erzeugen. Auch ist es bekannt, dass die Schmelze für ein sogenanntes Blasextrusionsverfahren zur Verfügung gestellt wird, bei welcher eine Blasfolie extrudiert wird. In sämtlichen Fällen ist es erforderlich, dass am Ende des Extruders die verflüssigte Schmelze über entsprechende Schmelzekanäle an den jeweiligen Ort der Verwendung transportiert wird. Diese Kanäle können beliebig komplex sein und insbesondere sich auch auf einzelne Kanäle aufteilen.

Nachteilhaft bei den bekannten Lösungen der Extrusionsvorrichtungen ist es, dass diese einen hohen Aufwand für den Materialwechsel mit sich bringen. So muss ein sogenannter Spülvorgang durchgeführt werden, wenn ein Materialwechsel von einem ersten Schmelzematerial auf ein zweites Schmelzematerial erfolgen soll. Wird beispielsweise bei einer Blasfolienextrusionsvorrichtung eine gewisse Zeit ein Produkt mit einer blauen Folienfarbe hergestellt und anschließend wird ein Wechsel auf eine transparente Folienfarbe gewünscht, so muss erst die blaue Folienfarbe und das entsprechende Schmelzematerial aus den einzelnen Schmelzekanälen gespült werden. Hierfür wird bereits mit dem Folgematerial die Extrusionsvorrichtung betrieben, bis der größte Teil des alten Materials der Schmelze ausgespült worden ist.

Da bei Schmelzekanälen im Randbereich dieser Schmelzekanäle die Transportgeschwindigkeit im Wesentlichen gleich null ist, das alte Material dort sozusagen anhaftet, ist der Spülvorgang sehr zeitaufwendig. Bei Blasextrusionsvorrichtungen mit einem Durchsatz von bis zu ca. 120 kg Schmelze pro Stunde kann dabei ein Spülvorgang üblicherweise 20 min. bis 1,5 Std. in Anspruch nehmen. Für jede Folienschicht, für welche ein Materialwechsel erfolgen soll, führt dies demnach zu 120 kg oder mehr Ausschussmaterial der Schmelze. Bei mehreren Folienschichten multipliziert sich diese Menge mit der Anzahl der Folienschichten, auch wenn nur eine einzige Folienschicht gespült wird. Damit können Ausschussraten von bis zu 1000 kg erreicht werden. Gleichzeitig stellt die Spülzeit eine Totzeit für die Maschine dar, in welcher keine verwertbare Produktion stattfinden kann. Dementsprechend ist die bekannte Extrusionsvorrichtung mit dem entsprechenden Spülverfahren hinsichtlich des Zeitaufwandes und hinsichtlich der entstehenden Kosten sowie des Materialausschusses mit deutlich erkennbaren Nachteilen behaftet.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Zeit für den Spülvorgang zu reduzieren.

Voranstehende Aufgabe wird gelöst durch einen Blaskopf mit den Merkmalen des Anspruchs 1 und ein Verfahren mit den Merkmalen des Anspruchs 10. Weitere Merkmale und Details der Erfindung ergeben sich aus den Unteransprüchen, der Beschreibung und den Zeichnungen.

Erfindungsgemäß dient die in einem Schmelzkanal des Blaskopfes angeordnete Wendevorrichtung dem Wenden einer Schmelze in einem Schmelzekanal. Hierfür weist die Wendevorrichtung einen Schmelzeeingang und einen Schmelzeausgang auf, wobei zwischen dem Schmelzeeingang und dem Schmelzeausgang zumindest ein Schmelzeführungsmittel angeordnet ist. Das Schmelzeführungsmittel dient einem Umschichten von Schmelze aus der Mitte des Schmelzeeingangs an den Rand des Schmelzeausgangs. Weiter ist das Schmelzeführungsmittel ausgebildet für ein Umschichten von Schmelze vom Rand des Schmelzeeingangs in die Mitte des Schmelzeausgangs.

Unter der Mitte des Schmelzekanals ist dabei grundsätzlich jeder Bereich zu verstehen, der vom Rand beabstandet ist. Insbesondere erfolgt also ein Umschichten vom Rand weg. Beispielsweise kann die Mitte des Schmelzeausgangs der gesamte Schmelzeausgangsbereich mit einem Abstand von ca. 5mm zum Rand sein.

Durch die Wendevorrichtung erfolgt also automatisch ohne bewegbare Teile durch eine aktive Führung mithilfe der Schmelzeführungsmittel ein Umschichten der Schmelze im Schmelzekanal. Die Wendevorrichtung bildet einen integralen Teil des Schmelzkanals aus. Über den Schmelzeeingang ist eine fluidkommunizierende Verbindung zum Schmelzekanal hergestellt, so dass die Schmelze über den Schmelzeeingang in die Wendevorrichtung einströmen kann. Nachdem der Schmelzeeingang passiert ist, wird die Schmelze über die Schmelzeführungsmittel in erfindungsgemäßer Weise umgeschichtet. Am Schmelzeausgang wird die umgeschichtete Schmelze die Wendevorrichtung wieder verlassen und über die fluidkommunizierende Verbindung im Schmelzekanal weiterströmen.

Erfindungsgemäß sind die Schmelzeführungsmittel ausgebildet für das Umschichten der Schmelze. Dabei werden zwei grundsätzliche Schichtfunktionalitäten zur Verfügung gestellt. Zum einen wird am Schmelzeeingang die Schmelze aus der Mitte verwendet und an den Rand des Schmelzeausgangs geführt. Gleichzeitig und über die gleiche Länge erfolgt ein Umschichten der Schmelze vom Rand des Schmelzeeingangs in die Mitte des Schmelzeausgangs. Somit wird das Material aus der Mitte am Schmelzeeingang mit dem Material am Rand des Schmelzeeingangs vertauscht, so dass am Schmelzeausgang eine komplett umgeschichtete Schmelzeschichtsituation vorliegt.

Die Wendevorrichtung reduziert nun die Spülzeit beim Einsatz in einer Extrusionsvorrichtung mit dem erfindungsgemäßen Blaskopf erheblich. So ist in einer Spülsituation in der Extrusionsvorrichtung davon auszugehen, dass altes Schmelzematerial im Bereich des Randes des Schmelzekanals länger verbleibt als in der Mitte. So wird während des Spülvorgangs relativ zügig die Mitte des Schmelzekanals mit komplett frischem und damit neuem Schmelzematerial ausgefüllt sein, während am Rand immer noch ein hoher Anteil altes Material haften bleibt. Durch den Einsatz der Wendevorrichtung erfolgt nun ein Umschichten dieses alten Materials vom Rand des Schmelzekanals in die Mitte des Schmelzekanals und damit in den Bereich der schnellen bzw. höheren Durchströmungsquote. Dies führt dazu, dass sozusagen altes Schmelzematerial vor der Wendevorrichtung in die Mitte des Schmelzekanals nach der Wendevorrichtung umgeschichtet wird, so dass es nun in der Mitte schneller abtransportiert werden kann. Dadurch, dass dieses Umschichten in erfindungsgemäßer Weise erfolgt, kann eine deutliche Reduktion der Spülzeit durch ein schnelleres Ausbringen des alten Materials aus dem Schmelzekanal erzielt werden.

Insbesondere kann durch eine Wendevorrichtung eine Reduktion um bis zu 50 % der gesamten Spülzeit erhalten werden. Ein weiterer Vorteil ist die Reduktion der Verweildauer der Schmelze am Rand auch im normalen Betrieb. Auf diese Weise lässt sich die thermische Beeinflussung auf das Material reduzieren wodurch Materialbeeinträchtigungen reduziert oder sogar vermieden werden.

Selbstverständlich können auch in einem Schmelzekanal zwei oder mehr Wendevorrichtungen mit definiertem Abstand vorgesehen sein. Bevorzugt ist es, wie es später noch näher erläutert wird, wenn die Wendevorrichtung sich bezogen auf die Länge des Schmelzekanals im Wesentlichen mittig angeordnet in diesem befindet.

Die Schmelzeführung mithilfe der Schmelzeführungsmittel kann dabei in unterschiedlichster Weise ausgestaltet sein. So können die später noch erläuterten Funktionen in einer Aufteilung genauso durch ein Schmelzeführungsmittel zur Verfügung gestellt werden, wie dies durch aktive Führungskanäle innerhalb des Schmelzekanals denkbar ist. Diese beiden unterschiedlichen Wendefunktionalitäten werden nachfolgend näher erläutert.

So kann es von Vorteil sein, wenn bei der Wendevorrichtung das zumindest eine Schmelzeführungsmittel einen ersten Führungskanal mit einer Führungsöffnung in der Mitte des Schmelzeeingangs und wenigstens einem Führungsausgang am Rand des Schmelzeausgangs aufweist. Hier erfolgt also ein aktives Wenden innerhalb eines einzigen Schmelzekanals, so dass auch ein Einbau einer separaten Wendevorrichtung in eine bestehende Geometrie eines Schmelzekanals denkbar wird. Durch das Aufnehmen in der Führungsöffnung wird nun das neue bzw. frische Material der Schmelze an den Rand geführt und dort über den Führungsausgang am Schmelzeausgang ausgegeben. Dort verdrängt es nun das dort befindliche alte Material in die Mitte, so dass durch ein passives Verschieben hier ein komplettes Umschichten erzielbar wird. Selbstverständlich kann jedoch auch eine Bewegung des alten Materials vom Rand in die Mitte aktiv erfolgen, wie dies durch einen zweiten Führungskanal im nachfolgenden Absatz näher erläutert wird. Unter einem Führungskanal kann ein vollständig geschlossener Kanal verstanden werden. Jedoch sind auch seitlich teilweise geöffnete Führungskanäle in Form von sogenannten Rutschen oder Rampen im Sinne der vorliegenden Erfindung als Führungskanal zu verstehen. Dementsprechend können auch die Führungsöffnung und der Führungsausgang jeweils eine komplett umrandete Geometrie aufweisen oder mit einer seitlichen Öffnung versehen sein.

Ein weiterer Vorteil kann es sein, wenn bei der Wendevorrichtung gemäß dem voranstehenden Absatz das zumindest eine Schmelzeführungsmittel einen zweiten Führungskanal aufweist mit einem Führungsausgang in der Mitte des Schmelzeausgangs und wenigstens einer Führungsöffnung am Rand des Schmelzeeingangs. Damit dient der zweite Führungskanal sozusagen zur umgekehrten Funktionalität wie der erste Führungskanal. Über die Führungsöffnung kann nun Schmelze und damit altes Material der Schmelze vom Rand am Schmelzeeingang aufgenommen und aktiv mit dem zweiten Führungskanal in die Mitte über den Führungsausgang am Schmelzeausgang geführt werden. Damit wird nicht nur durch Verdrängen, sondern durch aktives Führen und Umschichten die entsprechende erfindungsgemäße Umschichtung vom Rand zur Mitte und von der Mitte zum Rand möglich. Die Kombination von zwei Führungskanälen ist dabei vorzugsweise parallel vorgesehen, so dass die Führungsöffnung des ersten Führungskanals und die Führungsöffnung des zweiten Führungskanals in Strömungsrichtung an gleicher oder im Wesentlichen gleicher Stelle der Wendevorrichtung angeordnet sind. Gleichzeitig ist es vorteilhaft, wenn auch der Führungsausgang des ersten Führungskanals und der Führungsausganges des zweiten Führungskanals in Bezug auf die Strömungsrichtung an gleicher oder im Wesentlichen gleicher Position am Schmelzeausgang angeordnet sind. Ebenfalls vorteilhaft ist es, wenn alle Führungskanäle des zumindest einen Schmelzeführungsmittels den gleichen oder im Wesentlichen gleichen freien Strömungsquerschnitt aufweisen, um eine saubere Umschichtung, insbesondere mit definierten Volumenströmen gewährleisten zu können. Dabei sind die einzelnen Strömungsquerschnitte vorzugsweise ausgebildet gleiche oder im Wesentlichen gleiche Strömungsgeschwindigkeiten zur Verfügung stellen zu können. Damit wird ein unerwünschtes Abreißen einzelner Schichten voneinander mit hoher Wahrscheinlichkeit und damit mit großer Sicherheit vermieden.

Vorteilhaft ist es weiter, wenn bei der Wendevorrichtung das zumindest eine Schmelzeführungsmittel einen Teilungsabschnitt mit einem ersten Teilkanal und einem zweiten Teilkanal aufweist. Dabei ist vor dem Teilungsabschnitt ein Aufteilungsabschnitt zum Aufteilen der Schmelze auf Teilkanäle und nach dem Teilungsabschnitt ein Kombinationsabschnitt zum Zusammenführen der Schmelze aus den Teilkanälen angeordnet. Diese Ausführung eines Schmelzeführungsmittels ist selbstverständlich grundsätzlich kombinierbar mit den Schmelzeführungsmitteln der beiden voranstehenden Absätze. Durch diese Teilungsfunktion kann ebenfalls ein Umschichten erfolgen. So wird über einen Aufteilungsabschnitt die Menge der Schmelze in die beiden Teilkanäle aufgeteilt. Dies gilt selbstverständlich auch für die Randschicht der Schmelze, so dass in den beiden Teilkanälen nur ein Teil des Randes, nämlich insbesondere die Hälfte des Randes mit altem Material versehen ist, während im Bereich des Aufteilungsabschnittes die andere Hälfte des Randes bereits mit frischem Material versehen ist. Wird nun der Kombinationsabschnitt zum Zusammenführen der Schmelze aus den Teilkanälen in entsprechender Weise geometrisch ausgerichtet, so führt dies dazu, dass zumindest ein Teil der Randschicht mit neuem Material auch beim Kombinieren der Teilströme der Schmelze erhalten bleibt. Somit kann durch die Funktionalität des Aufteilens und des Kombinierens ebenfalls eine Möglichkeit einer erfindungsgemäßen Umschichtung gewährleistet werden. Insbesondere wird eine solche teilweise erfolgte Umschichtung mit einem entsprechenden Teilungsabschnitt mit Führungskanälen kombiniert, wie sie in den voranstehenden Absätzen erläutert worden sind.

Eine Wendevorrichtung gemäß dem voranstehenden Absatz lässt sich dahingehend weiterbilden, dass der Kombinationsabschnitt ausgebildet ist für ein mittiges Zusammenführen der Randabschnitte der Schmelze. Darunter ist zu verstehen, dass eine explizite geometrische Ausrichtung der einzelnen Teilkanäle im Kombinationsabschnitt vorliegt. Befinden sich beispielsweise nach dem Aufteilungsabschnitt die Randabschnitte mit altem Material der Schmelze an der Außenseite des jeweiligen Teilkanals, so können die beiden Teilkanäle in dem Kombinationsabschnitt derart zusammengeführt werden, dass nun die beiden Randabschnitte der Schmelze in den Teilkanälen mit altem Material mittig zusammengeführt werden. Damit erfolgt eine Rekombination der Teilströme der Schmelze unter einer kompletten oder im Wesentlichen kompletten Umschichtung, so dass nunmehr durch geschicktes Rekombinieren der Teilströme sich die Randschicht vor dem Schmelzeeingang in die Mitte am Schmelzeausgang verlagert hat. Gleichzeitig wurde neues Material aus der Mitte vom Schmelzeausgang in die Randschichten und damit an den Rand am Schmelzeausgang verlagert. Dabei wird vorzugsweise der jeweilige Durchmesser der Teilkanäle an den Durchmesser vor dem Aufteilabschnitt und nach dem Kombinationsabschnitt angepasst.

Ein weiterer Vorteil ist erzielbar, wenn bei dem erfindungsgemäßen Blaskopf eine Verschiebevorrichtung vorgesehen ist für ein Verschieben der Wendevorrichtung zwischen einer ersten Position und einer zweiten Position. In der ersten Position befinden sich der Schmelzeeingang und der Schmelzeausgang in fluidkommunizierender Verbindung mit dem Schmelzekanal. In der zweiten Position sind der Schmelzeeingang und der Schmelzeausgang von dem Schmelzekanal getrennt. Damit kann die Verschiebevorrichtung zum Beispiel translatorisch, rotatorisch oder in kombinierter Weise eine Bewegung der Wendevorrichtung durchführen. Insbesondere wird dabei für die Wendevorrichtung in der zweiten Position ein Rohrstück bzw. ein Kanalstück vorgesehen, welches die beiden verbleibenden Endabschnitte des Schmelzekanals fluidkommunizierend miteinander verbindet. Die Verschiebevorrichtung erlaubt es also, die Umschichtfunktion sozusagen durch das Einschieben der Wendevorrichtung einzuschalten und durch das Ausschieben der Wendevorrichtung auszuschalten. Da die Wendevorrichtung durch ihre Wendefunktionalität eine entsprechende Druckverlustsituation erzeugt, ist es vorteilhaft, im normalen Betrieb diese Wendefunktion auszuschalten. Damit wird der erhöhte Druckverlust ausschließlich während des Spülvorgangs eingesetzt, um die entsprechende Umschichtfunktion zu gewährleisten. Der erhöhte Druckverlust der Wendevorrichtung wird durch das Herausschieben der Wendevorrichtung in die zweite Position im Normalbetrieb ausgeschaltet und kann dementsprechend nicht mehr weiter stören.

Vorteilhaft ist es weiter, wenn bei der Wendevorrichtung der Schmelzeeingang und der Schmelzeausgang einen freien Strömungsquerschnitt aufweisen, welcher dem freien Strömungsquerschnitt des Schmelzekanals entspricht oder im Wesentlichen entspricht. Mit anderen Worten wird stufenlos und ohne Kante oder Durchmesservariation eine fluidkommunizierende Verbindung zwischen Schmelzeeingang und Schmelzekanal bzw. zwischen Schmelzeausgang und Schmelzekanal möglich. Eine solche Wendevorrichtung kann komplett in den Schmelzekanal eingesetzt werden bzw. den Schmelzekanal sogar teilweise ausbilden. Unter einem freien Strömungsquerschnitt ist dabei der Querschnitt senkrecht zur Strömung an der jeweiligen Position zu verstehen. Mit anderen Worten bildet der freie Strömungsquerschnitt die Strömungsquerschnittsfläche aus, über welche der Volumenstrom der Schmelze strömen kann.

Vorteilhaft ist es weiter, wenn bei der Wendevorrichtung der freie Strömungsquerschnitt das Schmelzeführungsmittel dem freien Strömungsquerschnitt des Schmelzeeingangs und/oder dem freien Strömungsquerschnitt des Schmelzeausgangs entspricht oder im Wesentlichen entspricht. Insbesondere ist diese Ausführungsform kombiniert mit der Ausführungsform gemäß dem voranstehenden Absatz. Der Strömungsquerschnitt der Schmelzeführungsmittel ist dabei vorzugsweise die Summe sämtlicher Schmelzeführungsmittel. Durch dieses Entsprechen wird also ein konstanter freier Strömungsquerschnitt zur Verfügung gestellt, so dass der Druckverlust durch Querschnittseinengungen vermieden oder im Wesentlichen vermieden wird. Dies reduziert den sich einstellenden Druckverlust beim Durchströmen mit Schmelze deutlich. Es verbleibt ausschließlich oder im Wesentlichen ausschließlich ein Druckverlust, welcher durch die entsprechende Einwirkung auf die Strömungsrichtung und damit einhergehend durch das aktive Umschichten der Schmelze erzeugt wird. So kann beispielsweise eine Aufweitung des Schmelzekanals eine solche geometrische Korrelation im Bereich der Wendevorrichtung erlauben. Auch ist es denkbar, dass beim Aufteilen in einem Teilungsabschnitt eine entsprechende Anpassung der Strömungsquerschnitte durch die entsprechende Durchmesser der Teilkanäle zur Verfügung gestellt werden.

Der erfindungsgemäße Blaskopf weist zumindest einen Schmelzekanal für die Förderung von Schmelze zu einem Blasausgang des Blaskopfs auf. Ein erfindungsgemäßer Blaskopf zeichnet sich dadurch aus, dass in dem zumindest einen Schmelzekanal wenigstens eine Wendevorrichtung gemäß der vorliegenden Erfindung angeordnet ist. Damit bringt ein erfindungsgemäßer Blaskopf die gleichen Vorteile mit sich, wie sie ausführlich mit Bezug auf eine erfindungsgemäße Wendevorrichtung erläutert worden sind. Der Schmelzekanal steht dabei in fluidkommunizierender Verbindung mit dem Schmelzeeingang und dem Schmelzeausgang der Wendevorrichtung. Insbesondere ist ein solcher Blaskopf mit zwei oder mehr Schmelzekanälen für unterschiedliche Schichten der Blasfolie vorgesehen. Die Wendevorrichtung ist vorzugsweise in gleicher oder identischer Ausgestaltung in sämtlichen Schmelzekanälen angeordnet, um für alle Schmelzekanäle die gleiche Spülzeitreduktion in erfindungsgemäßer Weise zur Verfügung stellen zu können.

Ein Blaskopf gemäß dem voranstehenden Absatz lässt sich dahingehend weiterbilden, dass die Wendevorrichtung bezogen auf die Länge des Schmelzekanals in der Mitte oder im Wesentlichen in der Mitte des Schmelzekanals angeordnet ist. Dabei handelt es sich um eine optimierte Positionierung der Wendevorrichtung, welche die maximale Reduktion der Spülzeit um ca. 50 % erlaubt. Selbstverständlich sind auch zwei oder mehr Wendevorrichtungen möglich, welche vorzugsweise mit gleicher bzw. identischer Teilung in dem jeweiligen Schmelzekanal eingesetzt sind.

Es kann weiter von Vorteil sein, wenn bei einem erfindungsgemäßen Blaskopf die Wendevorrichtung in einem Schmelzekanal in Form eines Zufuhrkanals von einem Extruder zu den Schmelzekanälen in Form von Verteilkanälen im Blaskopf angeordnet ist. Ein Blaskopf ist erfindungsgemäß vorzugsweise derart aufgebaut, dass er durch eine Vielzahl von einzelnen Bauteilen zusammengesetzt ist. Eine separat vom Blaskopf ausgebildete Extrudervorrichtung kann eine entsprechende Extrusionsschnecke vorsehen, in welcher dieser Extruder Material zur Schmelze aufschmelzen kann. Um den Abstand zwischen dem Extruder und dem Blaskopf zu überbrücken, kann der Blaskopf einen Zufuhrkanal oder mehrere Zufuhrkanäle aufweisen. So ist es möglich, dass die Wendevorrichtung in diesem Zufuhrkanal angeordnet ist, so dass bereits an dieser Stelle die erfindungsgemäße Funktionalität gegeben wird. Gleichzeitig ist es auch denkbar, dass innerhalb der Verteilkanäle entsprechende Wendevorrichtungen angeordnet sind. Auch die Kombination der Anordnung der Wendevorrichtungen an unterschiedlichen Positionen ist im Rahmen der vorliegenden Erfindung denkbar. Ein großer Vorteil der Anordnung der Wendevorrichtung im Schmelzekanal in Form eines Zufuhrkanals ist die gute Zugänglichkeit. Somit kann bereits die Anordnung bzw. die Montage der Wendevorrichtung einfach, kostengünstig und schnell erfolgen. Auch ist es auf diese Weise denkbar, dass bestehende Blasköpfe mit einer erfindungsgemäßen Wendevorrichtung nachgerüstet werden können. Nicht zuletzt ist die Wartung bzw. der Austausch einer Wendevorrichtung bei der entsprechenden Anordnung im Schmelzekanal in Form eines Zufuhrkanals deutlich vereinfacht.

Es kann ebenfalls vorteilhaft sein, wenn bei einem erfindungsgemäßen Blaskopf der Blaskopf einzelne Bauelemente aufweist, wobei die Schmelzekanäle und die wenigstens eine Wendevorrichtung zwischen den einzelnen Bauteilen angeordnet sind. Blasköpfe können hochkomplexe Verteilsysteme für die Schmelzekanäle aufweisen. Um diese hochkomplexen Geometrien der Schmelzekanäle herstellen zu können, sind häufig einzelne Bauelemente vorgesehen, aus welchen der Blaskopf zusammengesetzt wird. Beispielsweise können in einzelne Scheiben oder Schichten bzw. einzelnen separaten Bauteilen als Bauelemente die entsprechenden Schmelzekanäle eingefräst werden. Durch das Zusammensetzen wird in Korrelation mit benachbarten Bauteilen der jeweilige Schmelzekanal geschlossen und damit fluiddicht zur Verfügung gestellt. Das Ausbilden des Blaskopfs durch einzelne Bauelemente ermöglicht es, dass auch die Wendevorrichtung in entsprechender Weise ausgebildet wird. Dabei kann die Wendevorrichtung als Teil der Schmelzekanäle und damit als Teil der Bauelemente des Blaskopfs insbesondere in integraler Bauweise ausgebildet werden. Selbstverständlich ist es jedoch auch denkbar, dass die einzelnen Bauteile eine entsprechende Aufnahmeausnehmung aufweisen, um eine oder mehrerer Wendevorrichtungen einzusetzen. Damit wird die Montage des Blaskopfs in bestehender Weise möglich und gleichzeitig eine erfindungsgemäße Funktionalität durch die Anordnung der Wendevorrichtungen erzielbar.

Bei dem erfindungsgemäßen Blaskopf verzweigen sich die Schmelzekanäle innerhalb des Blaskopfs und in wenigstens einer Verzweigungsstufe die wenigstens eine Wendevorrichtung angeordnet ist. Ausgehend von einem Zufuhrkanal wird üblicherweise durch Durchmesserreduktion eine entsprechende Aufteilung und damit eine Verzweigung der Schmelzekanäle erreicht. Insbesondere, wenn durch den Blaskopf ein runder Blasauslass mit entsprechender Schmelze versorgt werden soll, ist eine solche Verzweigung insbesondere in Umfangsrichtung notwendig. Die einzelnen Verzweigungsstufen zeichnen sich dabei durch eine Erhöhung der Anzahl der Schmelzekanäle aus. Gleichzeitig reduziert sich der Durchmesser. Die einzelnen Verzweigungen definieren die Grenzen zwischen den einzelnen Verzweigungsstufen. Bevorzugt ist es, wenn auf wenigstens einer dieser Verzweigungsstufen eine Wendevorrichtung in erfindungsgemäßer Weise die Umschichtfunktion gewährleistet. Selbstverständlich können auch auf unterschiedlichen Verzweigungsstufen entsprechende Wendevorrichtungen vorgesehen werden. Durch die Verzweigung erfolgt dabei bereits eine Aufteilung der Schmelze und damit eine teilweise Aufteilung der entsprechenden Randschicht. Damit kann in den Verzweigungskanälen die jeweilige Wendevorrichtung eine reduzierte Umfangswirkung aufweisen, so dass die Umschichtung nur noch für den verbliebenden Randbereich durchgeführt wird.

Bei dem erfindungsgemäßen Blaskopf ist die wenigstens eine Wendevorrichtung als Teil, insbesondere als integraler Teil, des Schmelzekanals ausgebildet. Das bedeutet, dass der Schmelzekanal direkt in die Wendevorrichtung eingebracht wird und auf der anderen Seite fortführt. Die Wendevorrichtung ist vorzugsweise einstückig bzw. integral mit diesem Schmelzekanal ausgebildet. Insbesondere führt dies zu stufenlosem Übergang zwischen der Wendevorrichtung am Schmelzeeingang bzw. am Schmelzeausgang und dem Schmelzekanal. Damit lässt sich eine Fertigung direkt im Blaskopf in kostengünstiger und einfacher Weise erzielen. Damit reduziert sich das Risiko einer Fehlplatzierung der Wendevorrichtung im Schmelzekanal und dem damit einhergehenden unerwünschten hohen Druckverlust deutlich.

Es kann weiter vorteilhaft sein, wenn bei einem erfindungsgemäßen Blaskopf wenigstens zwei Wendevorrichtungen in einem Schmelzekanal angeordnet sind, insbesondere mit gleichen Abständen. Insbesondere ist dabei der Abstand zwischen den benachbarten Wendevorrichtungen besonders groß gewählt bzw. ausreichend groß gewählt, um kein unerwünschtes Umschichten und damit Zurückschichten der ersten Wendevorrichtung durchzuführen. Vorteilhaft ist es daher, wenn die Abstände zwischen dem Anfang des Schmelzekanals und der ersten Wendevorrichtung, zwischen den beiden Wendevorrichtungen und zwischen der zweiten Wendevorrichtung und dem Ende des Schmelzekanals gleich oder im Wesentlichen gleich ausgebildet sind. Die Anzahl der Wendevorrichtungen ist dabei vorzugsweise nach oben begrenzt und überschreitet, je nach Länge des Schmelzekanals, vorzugsweise nicht die Anzahl von 4. Dies führt zu einem Mindestabstand zwischen den einzelnen Wendevorrichtungen, welche ein Aufheben der erfindungsgemäßen Umschichtung vermeidet. Gleichzeitig kann auf diese Weise eine weitere Reduktion der Spülzeit im Blaskopf erzielt werden.

Ein weiterer Vorteil kann es sein, wenn bei einem erfindungsgemäßen Blaskopf in allen Schmelzekanälen jeweils wenigstens eine Wendevorrichtung an den gleichen Positionen angeordnet ist. Darunter ist zu verstehen, dass mit Bezug auf die Länge des jeweiligen Schmelzekanals bzw. mit Bezug auf die Anordnung in der jeweiligen Verzweigungsstufe alle Schmelzekanäle eine gleiche oder im Wesentlichen gleiche Position für die Wendevorrichtung besitzen. Das bedeutet, dass die Umschichtfunktion und damit die Reduktion der Spülzeit auch für sämtliche Schmelzekanäle für unterschiedlichste Schichten der herzustellenden Blasfolie gleich ist. Mit anderen Worten wird bewusst ein Bottleneck vermieden, so dass die Spülzeitreduktion durch die Umschichtfunktionalität gleichmäßig für sämtliche Lösungen zur Verfügung gestellt wird.

Ein weiterer Vorteil ist es, wenn bei einem erfindungsgemäßen Blaskopf die Wendevorrichtung eine Verschiebevorrichtung aufweist, wie sie bereits detailliert mit Bezug auf eine erfindungsgemäße Wendevorrichtung erläutert worden ist.

Bei einem erfindungsgemäßen Blaskopf ist es auch denkbar, dass bei einer Kombination von zwei oder mehr Wendevorrichtungen hintereinander jede Wendevorrichtung nur einen Teil des jeweiligen Randes abdeckt und damit nur von diesem Teil des Randes die Schmelze in die Mitte umschichtet. Dabei kann vorzugsweise jede Wendevorrichtung die Umschichtung für einen anderen Umfangsabschnitt durchführen, so dass nach dem passieren aller Wendevorrichtungen Schmelze vom vollumfänglichen Rand in die Mitte umgeschichtet worden ist. Beispielsweise können vier Wendevorrichtungen hintereinander jeweils 90° Umfang des Randes mit der Umschichtfunktion abdecken, so dass in Summe der gesamte Umfang von 360° umgeschichtet wird.

Ein weiterer Gegenstand der vorliegenden Erfindung ist ein Verfahren für die Durchführung eines Spülvorgangs gemäß dem Anspruch 10.

Selbstverständlich kann ein erfindungsgemäßer Blaskopf und/oder die entsprechende Wendevorrichtung auch in anderen Extrusionsanlagen, zum Beispiel in einer Folienextrusion, insbesondere in einer Flachfolienextrusion eingesetzt werde. Damit kann der Blaskopf grundsätzlich als Extrusionskopf ausgebildet sein.

Ein erfindungsgemäßes Verfahren bringt die gleiche erfindungsgemäße Funktionalität wie eine erfindungsgemäße Wendevorrichtung mit sich, so dass auch die gleichen Vorteile erzielt werden, wie sie ausführlich mit Bezug auf eine erfindungsgemäße Wendevorrichtung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine schematische Darstellung während eines Spülvorgangs bei bekannten Extrusionsvorrichtungen,
- Fig. 2: die Situation gemäß Fig. 1 beim Einsatz einer Wendevorrichtung eines erfindungsgemässen Blaskopfs,
- Fig. 3: eine Ausführungsform einer Wendevorrichtung eines erfindungsgemässen Blaskopfs,
- Fig. 4: die Ausführungsform der Fig. 3 mit weiterer Darstellung von Strömungsverhältnissen der Schmelze,
- Fig. 5: eine schematische Darstellung der Wirkung einer Wendevorrichtung eines erfindungsgemässen Blaskopfs,
- Fig. 6: eine weitere Ausführungsform einer Wendevorrichtung eines erfindungsgemässen Blaskopfs,
- Fig. 7: eine weitere Ausführungsform einer Wendevorrichtung eines erfindungsgemässen Blaskopfs,
- Fig. 8: eine Ausführungsform eines erfindungsgemäßen Blaskopfs,
- Fig. 9: eine weitere Ausführungsform eines erfindungsgemäßen Blaskopfs,
- Fig. 10: eine weitere Ausführungsform eines erfindungsgemäßen Blaskopfs,
- Fig. 11: eine weitere Ausführungsform eines erfindungsgemäßen Blaskopfs, und
- Fig. 12: eine weitere Ausführungsform eines erfindungsgemäßen Blaskopfs.

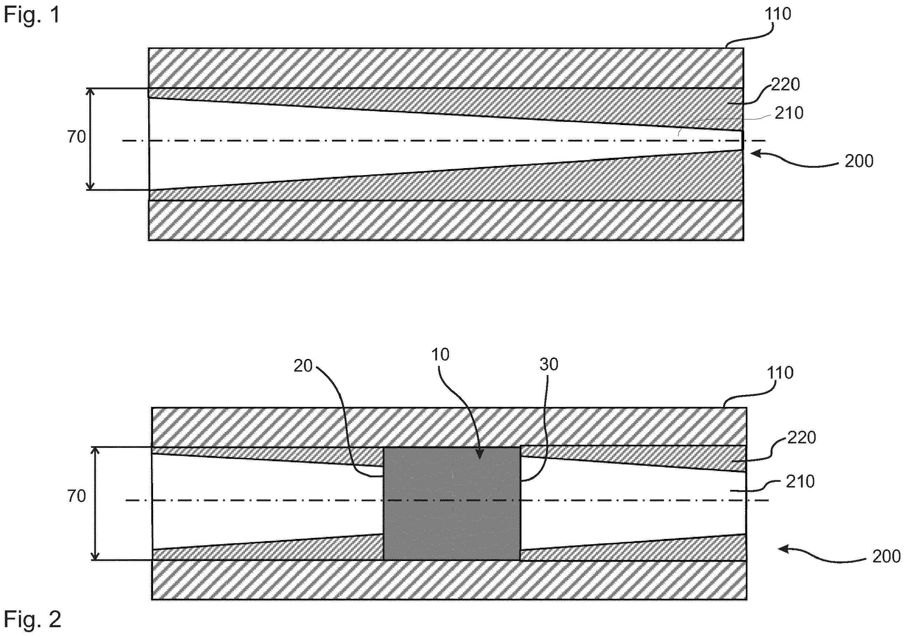

In Fig. 1 ist ein Schmelzekanal 110 mit einer Strömungsrichtung von links nach rechts dargestellt, wie er sich während des Spülvorgangs darstellt. Innerhalb des Schmelzekanals 110 ist ein freier Strömungsquerschnitt 70 vorgesehen, durch welchen Schmelze 200 strömt. Hier ist zu unterscheiden zwischen altem Schmelzematerial 220 und neuem Schmelzematerial 210. Hier ist gut zu erkennen, dass über den länglichen Verlauf des Schmelzekanals 110 während des Spülverlaufs sich eine rampenförmige bzw. konusförmige Ausbildung zwischen dem alten Schmelzematerial 220 und dem neuen Schmelzematerial 210 ausbildet. Dieser Konus wandert während der Spülzeit im Verlauf nach rechts, bis letztendlich der größte Teil des alten Schmelzematerials 220 ausgebracht worden ist und mit der aktiven Produktion weiter verfahren werden kann.

In Fig. 2 ist die Wirkungsweise der Wendevorrichtung 10 dargestellt. Hier erfolgt nun ein Umschichten vom Rand der Schmelze 200 in die Mitte der Schmelze 200 und umgekehrt. Am Schmelzeeingang 20 der Wendevorrichtung 10 wird dementsprechend Material vom Rand der Schmelze 200 aufgenommen und in die Mitte am Schmelzeausgang 30 bereitgestellt. In umgekehrter Weise wird frisches bzw. neues Schmelzematerial 210 aus der Mitte am Schmelzeeingang 20 an den Rand des Schmelzeausgangs 30 geführt. Wie gut zu erkennen ist, reduziert sich damit die sich einstellende Menge an altem Schmelzematerial 220 am rechten Ende des Schmelzekanals 110. Die Darstellung der Fig. 2 ist zum gleichen Zeitpunkt während des Spülvorgangs erfolgt, wie bei Fig. 1.

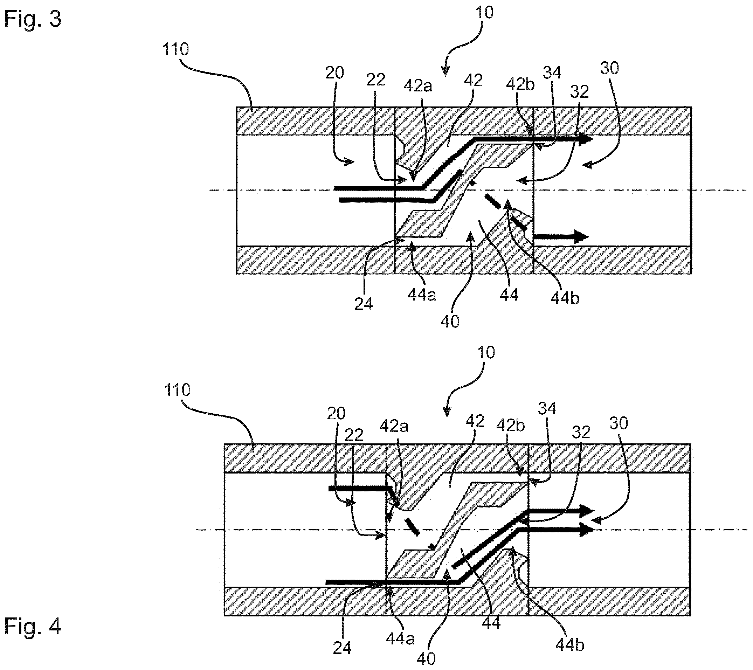

Die Fig. 3 und 4 zeigen eine erste Ausführungsform der Wendevorrichtung 10. Diese Wendevorrichtung 10 ist mit zwei Führungskanälen 42 und 44 als Schmelzeführungsmittel 40 ausgestattet. Über einen nicht näher erläuterten Ringsammler wird eine Führungsöffnung 44a am Rand 24 des Schmelzeeingangs 20 zur Verfügung gestellt, so dass entsprechende Schmelze 200 dort in den zweiten Führungskanal 44 einströmen kann. Dies ist mit den Pfeilen in Fig. 4 dargestellt. Über einen Führungsausgang 44b in der Mitte 32 des Schmelzeausgangs 30 erfolgt nun die Umschichtung vom Rand in die Mitte für dieses Material der Schmelze 200.

In gleicher Weise ist in der Mitte 22 des Schmelzeeingangs 20 eine Führungsöffnung 42a des ersten Führungskanals 42 vorgesehen, welcher es ermöglicht entlang der Pfeile der Fig. 3 die Schmelze 200 an den Rand 34 des Schmelzeausgangs 30 und den entsprechenden Führungsausgang 42b umzuschichten. Hier handelt es sich um eine technische Lösung mittels eines aktiven Umschichtens, wobei die Wendevorrichtung 10 Bestandteil des Schmelzekanals 110 ist.

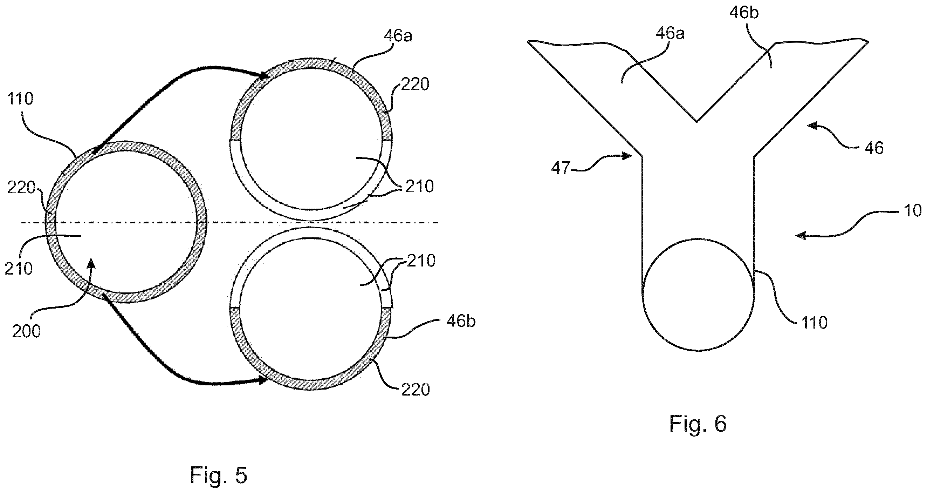

Die Fig. 5 und 6 zeigen die Möglichkeit, ein Umschichten durch eine Teilungsfunktionalität zur Verfügung zu stellen. Ausgehend von einem Schmelzekanal 110 gemäß Fig. 6 wird über einen Aufteilungsabschnitt 47 eine Aufteilung der Schmelze 200 auf zwei Teilkanäle 46a und 46b des Teilungsabschnittes 46 erfolgen. Dies führt schematisch zu einer Verteilung gemäß der Fig. 4. Während ausgehend vom Schmelzekanal 110 komplett umfänglich altes Schmelzematerial 220 das neue Schmelzematerial 210 umgibt, wird durch das Aufteilen in den Teilkanälen 46a und 46b nur noch ungefähr die Hälfte des Umfangs mit altem Schmelzematerial 220 bedeckt sein. Die andere Hälfte in den Teilkanälen 46a und 46b ist am Rand mit bereits neuem Schmelzematerial 210 versehen. Wird nun durch geschicktes Kombinieren ein mittiges Zusammenführen der beiden Teilkanäle 46 für die Randbereiche mit dem alten Schmelzematerial 220 durchgeführt, so kann ebenfalls ein komplettes oder zumindest teilweises erfindungsgemäßes Umschichten durch diese Teilungsfunktion erfolgen.

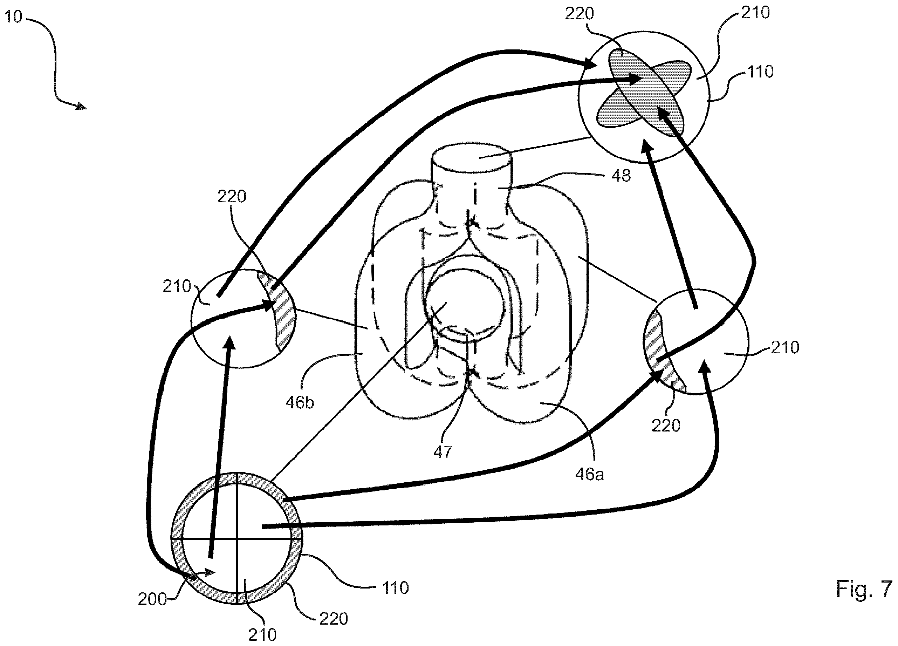

Die Fig. 7 zeigt schematisch eine mögliche weitere Ausführungsform einer Wendevorrichtung 10 mit dieser Teilungsfunktionalität. Hier erfolgt ein Aufteilen auf insgesamt vier Teilkanäle 46a und 46b und ein Rekombinieren in einem Kombinationsabschnitt 48. Schematisch ist darüber hinaus die entsprechende Verteilung von altem Schmelzematerial 220 und neuem Schmelzematerial 210 in den entsprechenden Kanälen dargestellt. Nach dem Kombinieren bzw. Zusammenführen am Kombinationsabschnitt 48 befinden sich die Randabschnitte mit dem alten Material 220 komplett mittig, so dass der Umgebungsrand im Schmelzekanal 110 im Wesentlichen vollständig durch das neue Schmelzematerial 210 ausgebildet ist.

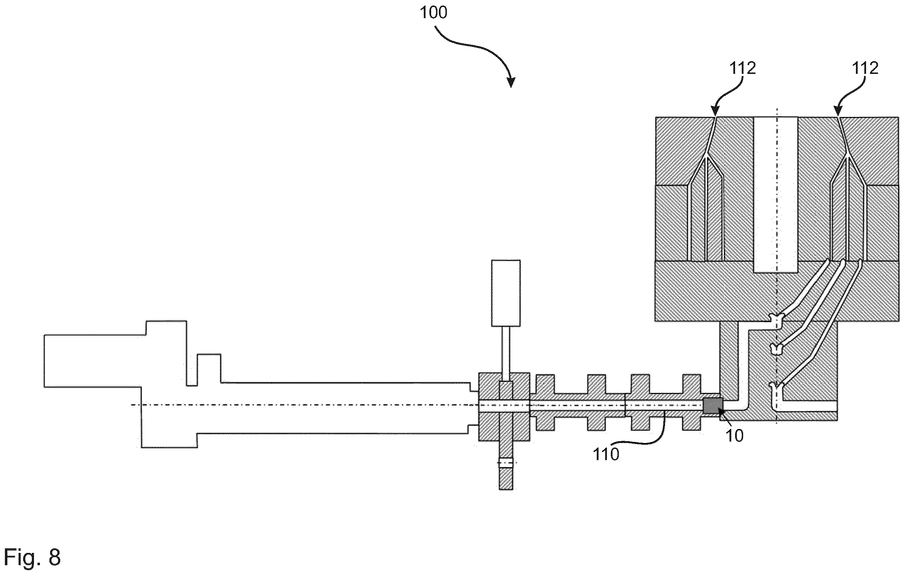

In Fig. 8 ist dargestellt, wie in einem Schmelzekanal 110 in einem Blaskopf 100 eine Wendevorrichtung 10 angeordnet sein kann. Dabei kann es sich hier um jede der beschriebenen Ausführungsformen der Wendevorrichtung 10 handeln. Dabei ist der Blaskopf 100 mit einem ringförmigen Blasausgang 112 versehen.

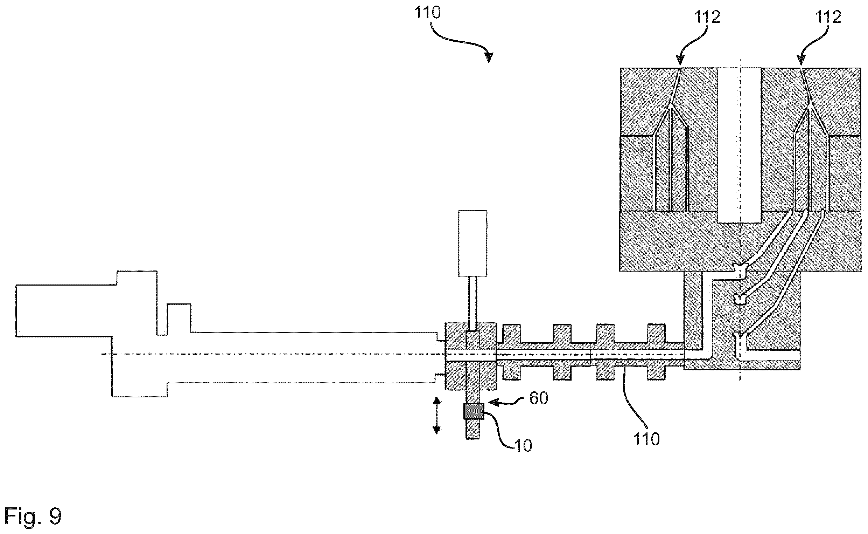

Die Fig. 9 zeigt eine Lösung ähnlich der Fig. 8, wobei jedoch hier eine Verschiebevorrichtung 60 für die Wendevorrichtung 10 dargestellt ist. Gemäß der Fig. 9 befindet sich die Wendevorrichtung 10 in der zweiten Position, und damit außer fluidkommunizierendem Eingriff mit dem Schmelzekanal 110. Hierbei handelt es sich um die Betriebsposition. Für die Spülsituation wird über die Verschiebevorrichtung 60 die Wendevorrichtung 10 in den Schmelzekanal 110 eingebracht und kann damit die erfindungsgemäße Funktionalität für die Reduktion der Spülzeit zur Verfügung stellen.

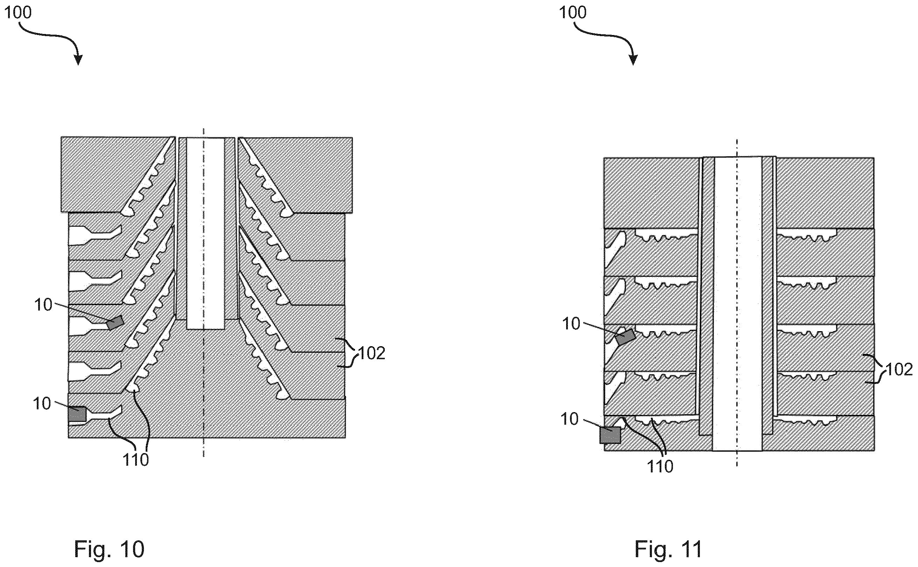

Die Fig. 10 bis 12 zeigen weitere Ausführungsformen erfindungsgemäßer Blasköpfe 100. Diesen Ausführungsformen ist es gemeinsam, dass die einzelnen Blasköpfe 100 mit einer Vielzahl von Bauelementen 102 ausgebildet sind. Die einzelnen Schmelzekanäle 110 bilden sich dabei zwischen den einzelnen Bauteilen 102 aus. In Fig. 10 ist ein schichtweiser Aufbau dargestellt, welcher mit konischen Ausführungsformen die einzelnen Schmelzekanäle 110 zur Verfügung stellt. Die einzelnen Wendevorrichtungen 10 können dabei sowohl im Eingangsbereich als auch im weiteren Verlauf der Schmelzekanäle 110 angeordnet sein. Eine ähnliche Lösung ist auch bei einem plattenförmigen Schichtaufbau gemäß der Ausführungsform des Blaskopfs 100 nach Fig. 11 denkbar. Auch hier sind die einzelnen Wendevorrichtungen 10 zwischen den einzelnen Bauelementen 102 in den Schmelzekanälen 110 anordenbar.

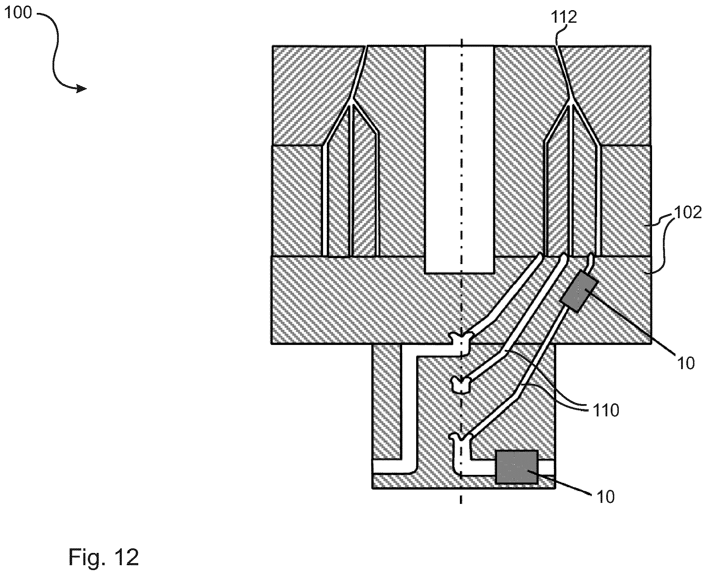

In Fig. 12 ist ebenfalls ein Blaskopf 100 dargestellt, welcher aus einzelnen Bauelementen 102 aufgebaut ist. Hier sind gut die Verzweigungen zu erkennen, welche ausgehend von einem einzelnen Schmelzekanal 110 vorgesehen werden. Auch ist hier gut zu erkennen, dass hier zwei Wendevorrichtungen 10 an unterschiedlichen Orten und damit in unterschiedlichen Verzweigungsstufen des Blaskopfs 100 anordenbar sind.

### Bezugszeichenliste

- 10: Wendevorrichtung
- 20: Schmelzeeingang
- 22: Mitte des Schmelzeeingangs
- 24: Rand des Schmelzeeingangs
- 30: Schmelzeausgang
- 32: Mitte des Schmelzeausgangs
- 34: Rand des Schmelzeausgangs
- 40: Schmelzeführungsmittel
- 42: erster Führungskanal
- 42a: Führungsöffnung
- 42b: Führungsausgang
- 44: zweiter Führungskanal
- 44a: Führungsöffnung
- 44b: Führungsausgang
- 46: Teilungsabschnitt
- 46a: erster Teilkanal
- 46b: zweiter Teilkanal
- 47: Aufteilungsabschnitt
- 48: Kombinationsabschnitt
- 60: Verschiebevorrichtung
- 70: freier Strömungsquerschnitt

- 100: Blaskopf
- 102: Bauelement
- 110: Schmelzekanal
- 112: Blasausgang
- 200: Schmelze
- 210: Neues Schmelzematerial
- 220: Altes Schmelzematerial

## Patentansprüche

1. Blaskopf (100) für das Durchführen eines Blasfolienextrusionsverfahrens, aufweisend zumindest einen Schmelzekanal (110) für die Förderung von Schmelze (200) zu einem Blasausgang (120) des Blaskopfes,
wobei in dem zumindest einen Schmelzekanal (110) wenigstens eine Wendevorrichtung (10) für das Wenden einer Schmelze (200) in einem Schmelzekanal (110) angeordnet ist und die Wendevorrichtung (10) einen Schmelzeeingang (20) und einen Schmelzeausgang (30) aufweist, wobei zwischen dem Schmelzeeingang (20) und dem Schmelzeausgang (30) zumindest ein Schmelzeführungsmittel (40) für ein Umschichten von Schmelze (200) aus der Mitte (22) des Schmelzeeingangs (20) an den Rand (34) des Schmelzeausgangs (30) und für ein Umschichten von Schmelze (200) vom Rand (24) des Schmelzeeingangs (20) in die Mitte (32) des Schmelzeausgangs (30), angeordnet ist,
**dadurch gekennzeichnet,**
**dass** die wenigstens eine Wendevorrichtung (10) als integraler Teil des zumindest einen Schmelzekanals (110) ausgebildet ist, wobei der zumindest eine Schmelzekanal (110) sich innerhalb des Blaskopfs (100) verzweigt und die wenigstens eine Wendevorrichtung (10) in wenigstens einer Verzweigungsstufe angeordnet ist.

2. Blaskopf (100) nach Anspruch 1,
**dadurch gekennzeichnet, dass**
das zumindest eine Schmelzeführungsmittel (40) einen ersten Führungskanal (42) mit einer Führungsöffnung (42a) in der Mitte (22) des Schmelzeeingangs (20) und wenigstens einem Führungsausgang (42b) am Rand (34) des Schmelzeausgangs (30) aufweist und/oder das zumindest eine Schmelzeführungsmittel (40) einen zweiten Führungskanal (44) aufweist mit einem Führungsausgang (44b) in der Mitte (32) des Schmelzeausgangs (30) und wenigstens einer Führungsöffnung (44a) am Rand (24) des Schmelzeeingangs (20).

3. Blaskopf (100) nach einem der vorangegangenen Ansprüche,
**dadurch gekennzeichnet, dass**
das zumindest eine Schmelzeführungsmittel (40) einen Teilungsabschnitt (46) mit einem ersten Teilkanal (46a) und einem zweiten Teilkanal (46b) aufweist, wobei vor dem Teilungsabschnitt (46) ein Aufteilungsabschnitt (47) zum Aufteilen der Schmelze (200) auf die Teilkanäle (46a, 46b) und nach dem Teilungsabschnitt (46) ein Kombinationsabschnitt (48) zum Zusammenführen der Schmelze (200) aus den Teilkanälen (46a, 46b) angeordnet ist und/oder der Kombinationsabschnitt (48) ausgebildet ist für ein mittiges Zusammenführen der Randabschnitte der Schmelze (200).

4. Blaskopf (100) nach einem der vorangegangenen Ansprüche,
**dadurch gekennzeichnet, dass**
die Wendevorrichtung (10) bezogen auf die Länge des Schmelzekanals (110) in der Mitte oder im Wesentlichen in der Mitte des Schmelzekanals (110) angeordnet ist.

5. Blaskopf (100) nach einem der vorangegangenen Ansprüche,
**dadurch gekennzeichnet, dass**
die Wendevorrichtung (10) in einem Schmelzekanal (110) in Form eines Zufuhrkanals von einem Extruder zu den Schmelzekanälen (110) in Form von Verteilkanälen im Blaskopf (100) angeordnet ist.

6. Blaskopf (100) nach einem der vorangegangenen Ansprüche,
**dadurch gekennzeichnet, dass**
der Blaskopf (100) einzelne Bauelemente (102) aufweist, wobei die Schmelzekanäle (110) und die wenigstens eine Wendevorrichtung (10) zwischen den einzelnen Bauteilen (102) angeordnet sind.

7. Blaskopf (100) nach einem der vorangegangenen Ansprüche,
**dadurch gekennzeichnet, dass**
wenigstens zwei Wendevorrichtungen (10) in einem Schmelzekanal (110) angeordnet sind, insbesondere mit gleichen Abständen.

8. Blaskopf (100) nach einem der vorangegangenen Ansprüche,
**dadurch gekennzeichnet, dass**
in allen Schmelzekanälen (110) jeweils wenigstens eine Wendevorrichtung (10) an den gleichen Positionen angeordnet ist.

9. Blaskopf (100) nach einem der vorangegangenen Ansprüche,
**dadurch gekennzeichnet, dass**
die Wendevorrichtung eine Verschiebevorrichtung (60) aufweist für ein Verschieben der Wendevorrichtung (10) zwischen einer ersten Position, in welcher der Schmelzeeingang (20) und der Schmelzeausgang (30) sich in fluidkommunizierender Verbindung mit dem Schmelzekanal (110) befinden, und einer zweiten Position, in welcher der Schmelzeeingang (20) und der Schmelzeausgang (30) von dem Schmelzekanal (110) getrennt sind.

10. Verfahren für die Durchführung eines Spülvorgangs in einem Blaskopf (110) mit den Merkmalen eines der vorangegangenen Ansprüche, aufweisend die folgenden Schritte:
- Einbringen einer Schmelze (200) in einen Schmelzeeingang (20) einer Wendevorrichtung (10),
- Umschichten von Schmelze (200) aus der Mitte (22) des Schmelzeeingangs (20) an den Rand (34) eines Schmelzeausgangs (30) der Wendevorrichtung (10) und
- Umschichten von Schmelze (200) vom Rand (24) des Schmelzeeingangs (20) in die Mitte (32) des Schmelzeausgangs (30).

## Claims

1. A blow head (100) for carrying out a blown film extrusion process, having at least one melt channel (110) for conveying melt (200) to a blow outlet (120) of the blow head, wherein in the at least one melt channel (110) at least one turning device (10) is arranged for turning a melt (200) in a melt channel (110) and the turning device (10) has a melt inlet (20) and a melt outlet (30),
wherein between the melt inlet (20) and the melt outlet (30) at least one melt guiding means (40) is arranged for shifting melt (200) from the center (22) of the melt inlet (20) to the edge (34) of the melt outlet (30) and for shifting melt (200) from the edge (24) of the melt inlet (20) into the center (32) of the melt outlet (30),
**characterized in**
**that** the at least one turning device (10) is designed as an integral part of the at least one melt channel (110), wherein the at least one melt channel (110) branches inside the blow head (100) and the at least one turning device (10) is arranged in at least one branching stage.

2. The blow head (100) according to Claim 1,
**characterized in that**
the at least one melt guiding means (40) has a first guide channel (42) with a guide opening (42a) in the center (22) of the melt inlet (20) and at least one guide outlet (42b) at the edge (34) of the melt outlet (30) and/or the at least one melt guiding means (40) has a second guide channel (44) with a guide outlet (44b) in the center (32) of the melt outlet (30) and at least one guide opening (44a) at the edge (24) of the melt outlet (20).

3. The blow head (100) according to any one of the preceding claims,
**characterized in that**
the at least one melt guiding means (40) has a dividing section (46) with a first sub-channel (46a) and a second sub-channel (46b), wherein upstream of the dividing section (46) an allocation section (47) is arranged for allocating the melt (200) to the sub-channels (46a, 46b) and downstream of the dividing section (46) a combination section (48) is arranged for combining the melt (200) from the sub-channels (46a, 46b) and/or the combination section (48) is formed for a central combining of the edge sections of the melt (200).

4. The blow head (100) according to any one of the preceding claims,
**characterized in that**
the turning device (10) is arranged relative to the length of the melt channel (110) in the center or substantially in the center of the melt channel (110).

5. The blow head (100) according to any one of the preceding claims,
**characterized in that**
the turning device (10) is arranged in a melt channel (110) in the form of a feed channel from an extruder to the melt channels (110) in the form of distribution channels in the blow head (100).

6. The blow head (100) according to any one of the preceding claims,
**characterized in that**
the blow head (100) has individual components (102), wherein the melt channels (110) and the at least one turning device (10) are arranged between the individual components (102).

7. The blow head (100) according to any one of the preceding claims,
**characterized in that**
at least two turning devices (10) are arranged in a melt channel (110), in particular at equal intervals.

8. The blow head (100) according to any one of the preceding claims,
**characterized in that**
in all of the melt channels (110) in each case at least one turning device (10) is arranged in the same positions.

9. The blow head (100) according to any one of the preceding claims,
**characterized in that**
the turning device has a displacement device (60) for a displacement of the turning device (10) between a first position, in which the melt inlet (20) and the melt outlet (30) are located in fluid-communicating connection to the melt channel (110), and a second position, in which the melt inlet (20) and the melt outlet (30) are separated from the melt channel (110).

10. A method for carrying out a rinsing process in a blow head (110) with the features of any one of the preceding claims, having the following steps:
- Introducing a melt (200) into the melt inlet (20) of a turning device (10),
- shifting melt (200) from the center (22) of the melt inlet (20) to the edge (34) of a melt outlet (30) of the turning device (10) and
- shifting melt (200) from the edge (24) of the melt inlet (20) into the center (32) of the melt outlet (30).

## Revendications

1. Tête de soufflage (100) pour la réalisation d'un procédé d'extrusion de feuille soufflée, comportant au moins un canal de matière fondue (110) pour le transport de matière fondue (200) vers une sortie de soufflage (120) de la tête de soufflage,
dans laquelle au moins un dispositif de retournement (10) pour le retournement d'une matière fondue (200) dans un canal de matière fondue (110) est disposé dans le canal de matière fondue (110) au moins au nombre de un, et
le dispositif de retournement (10) comporte une entrée de matière fondue (20) et une sortie de matière fondue (30),
au moins un moyen de guidage de matière fondue (40) étant disposé entre l'entrée de matière fondue (20) et la sortie de matière fondue (30) pour la redistribution de la matière fondue (200) à partir du milieu (22) de l'entrée de matière fondue (20) vers le bord (34) de la sortie de matière fondue (30) et pour une redistribution de la matière fondue (200) à partir du bord (24) de l'entrée de matière fondue (20) vers le milieu (32) de la sortie de matière fondue (30),
**caractérisée en ce que**
le dispositif de retournement (10) au moins au nombre de un est constitué en tant que partie intégrante du canal de matière fondue (110) au moins au nombre de un, le canal de matière fondue (110) au moins au nombre de un se ramifiant à l'intérieur de la tête de soufflage (100), et le dispositif de retournement (10) au moins au nombre de un étant disposé dans au moins un niveau de ramification.

2. Tête de soufflage (100) selon la revendication 1,
**caractérisée en ce que**
le moyen de guidage de matière fondue (40) au moins au nombre de un comporte un premier canal de guidage (42) avec une ouverture de guidage (42a) au milieu (22) de l'entrée de matière fondue (20) et au moins une sortie de guidage (42b) au bord (34) de la sortie de matière fondue (30), et/ou le moyen de guidage de matière fondue (40) au moins au nombre de un comporte un deuxième canal de guidage (44) avec une sortie de guidage (44b) au milieu (32) de la sortie de matière fondue (30) et au moins une ouverture de guidage (44a) au bord (24) de l'entrée de matière fondue (20).

3. Tête de soufflage (100) selon l'une des revendications précédentes,
**caractérisée en ce que**
le moyen de guidage de matière fondue (40) au moins au nombre de un comporte un tronçon de division (46) avec un premier canal partiel (46a) et avec un deuxième canal partiel (46b), un tronçon de répartition (47) étant disposé en amont du tronçon de division (46) pour la répartition de la matière fondue (200) vers les canaux partiels (46a, 46b), et un tronçon de combinaison (48) étant disposé en aval du tronçon de division (46) pour le rassemblement de la matière fondue (200) en provenance des canaux partiels (46a, 46b), et/ou le tronçon de combinaison (48) étant constitué pour un rassemblement central des tronçons de bord de la matière fondue (200).

4. Tête de soufflage (100) selon l'une des revendications précédentes,
**caractérisée en ce que,**
par rapport à la longueur du canal de matière fondue (110), le dispositif de retournement (10) est disposé au milieu ou essentiellement au milieu du canal de matière fondue (110).

5. Tête de soufflage (100) selon l'une des revendications précédentes,
**caractérisée en ce que**
le dispositif de retournement (10) est disposé dans un canal de matière fondue (110) sous forme de canal d'amenée à partir d'une extrudeuse (110) vers des canaux de matière fondue (110) sous forme de canaux de distribution dans la tête de soufflage (100).

6. Tête de soufflage (100) selon l'une des revendications précédentes,
**caractérisée en ce que**
la tête de soufflage (100) comporte des composants (102) individuels, les canaux de matière fondue (110) et le dispositif de retournement (10) au moins au nombre de un étant disposés entre les composants (102) individuels.

7. Tête de soufflage (100) selon l'une des revendications précédentes,
**caractérisée en ce**
**qu'**au moins deux dispositifs de retournement (10) sont disposés dans un canal de matière fondue (110), en particulier à des intervalles égaux.

8. Tête de soufflage (100) selon l'une des revendications précédentes,
**caractérisée en ce que,**
dans tous les canaux de matière fondue (110), respectivement au moins un dispositif de retournement (10) est disposé dans les mêmes positions.

9. Tête de soufflage (100) selon l'une des revendications précédentes,
**caractérisée en ce que**
le dispositif de retournement comporte un dispositif de déplacement (60) pour un déplacement du dispositif de retournement (10) entre une première position, dans laquelle l'entrée de matière fondue (20) et la sortie de matière fondue (30) se trouvent dans une relation de communication fluidique avec le canal de matière fondue (110), et une deuxième position, dans laquelle l'entrée de matière fondue (20) et la sortie de matière fondue (30) sont séparées du canal de matière fondue (110).

10. Procédé de réalisation d'un processus de lavage dans une tête de soufflage (110) ayant les caractéristiques de l'une des revendications précédentes, comportant les étapes suivantes :
- introduction d'une matière fondue (200) dans une entrée de matière fondue (20) d'un dispositif de retournement (10),
- redistribution de la matière fondue (200) à partir du milieu (22) de l'entrée de matière fondue (20) vers le bord (34) d'une sortie de matière fondue (30) du dispositif de retournement (10) et
- redistribution de la matière fondue (200) à partir du bord (24) de l'entrée de matière fondue (20) vers le milieu (32) de la sortie de matière fondue (30).
